# EUROPEAN PATENT APPLICATION

(11) **EP 4 316 968 A1**
(43) Date of publication of application: **07.02.2024**
(21) Application number: 22779199.3
(22) Date of filing: 25.02.2022
(51) Int. Cl.: B63B 3/06

(54) **ELECTRIC PALLET TRUCK WITH SELF-LEVELLING FORKS**

(30) Priority: 31.03.2021 ES 202130663 U
(71) Applicant: Martínez Fernández, Rafael, 46184 San Antonio de Benageber (ES)
(72) Inventor: Martínez Fernández, Rafael, 46184 San Antonio de Benageber (ES)
(74) Representative: Galán Vélez, Reyes
(86) International application number: PCT/ES2022/070101
(87) International publication number: WO 2022/207947

(57) **Abstract**

The present invention relates to a pallet truck for transporting goods which has self-levelling fork systems to prevent goods from tipping over by automatically tilting in both the transverse and longitudinal directions, enhancing the safety of the pallet truck when the ground is inclined in the aforementioned planes. The invention is intended for the industrial sector for constructing machinery for transporting goods

## Description

### FIELD OF THE TECHNIQUE

The invention described above is related to the sector of machines for the movement of palletized goods inside areas designed for this purpose, such as warehouses or even inside vehicles used for transport.

To be more specific, the enunciated invention falls within the sector of machines intended for this purpose and which are electrically driven and operated by a user by means of a tiller, being known as electric pallet trucks.

### STATE OF THE ART

As a reference to the current state of the art, it should be noted that the inventor is aware of different types and models of machinery intended for the purpose described above.

Although they vary in design and positioning of the operator, in general those existing in the prior art are composed of the same parts and functions.

As for the parts, they are generally the following: a drawbar, a driving wheel with or without auxiliary wheels, a lifting system, a battery, two forks or "nails" and two wheels.

As far as the functions are concerned, they are usually the following: forward, reverse, and lifting or lowering of the forks.

The inventor is unaware of the existence of any machine which, although having a similar composition and the same functions, has added technical elements which provide this type of machine with functions related to safety in its use and handling, as does the invention described above.

### OBJECT OF THE INVENTION

The invention, as described in the last paragraph of the prior art, is intended to provide the sector described above with a machine for moving palletized goods either in a warehouse, inside a transport vehicle, or even during the journey from the vehicle to the warehouse, with a machine in which the goods do not run the risk of being accidentally overturned and in turn may endanger other operators in the vicinity of the working area.

Unfortunately, tipping of goods transported on pallet trucks due to sudden turns by the operator or unevenness in the road surface where the machines are operated is common.

In addition to damaging the overturned goods, with the consequent economic damage caused, there is also the danger that any operator wandering in the area, or even the pallet truck operator himself, may be injured by such overturns.

The main object of the invention is to provide a machine which has self-leveling systems which can prevent such overturning.

### DESCRIPTION OF THE INVENTION

Thus, the electric pallet truck with self-leveling forks which the invention proposes is configured as an outstanding novelty within its field of application, the characterizing details which make it possible and which distinguish it from what is already known today being conveniently set out in the indications accompanying the present description.

Concretely, what the invention proposes, as previously mentioned, is an electric machine for the movement of palletized goods operated by a user and which avoids the overturning of the goods during their movement by correcting the inclination of the pallet by means of its forks as a consequence of abrupt turns of the machine and by the use of the same on uneven surfaces.

For this purpose, the pallet truck has two well differentiated parts or bodies: a fixed part of common composition to most of this type of machines destined to the control and handling from which the user operates, and a mobile part which carries the pallet, raises or lowers, and at the same time performs automatically a transversal and longitudinal tilting.

In the fixed part there is a steering drawbar with the drive buttons for its movement or brake and lifting or lowering of the pallet, a driving wheel with its traction motor and brake and auxiliary wheels, a hydraulic lifting system, electrical and electronic components, and a battery. As an unusual and novel element, associated to the mobile part, it has inclination sensors which are in charge of determining the inclination of the machine, either transversally or longitudinally.

In the mobile part, in addition to the forks with their respective wheels for lifting and carrying the pallet, there is a transversal tilting mechanism to the right or left which, by means of an order received from the fixed part through one of the tilt sensors, maintains the horizontality of the forks and consequently the pallet transported level.

In this mobile part, there is also a mechanism for longitudinal tilting forward or backward also ordered by another tilt sensor in order to maintain the horizontality of the forks and therefore the pallet level.

Due to the purpose of a pallet truck, which is to move palletized goods at low height, the pallet truck recommended here has a little more lift than common pallet trucks because of the transversal and longitudinal maneuvering range that the forks need for their tilting.

The transversal and longitudinal tilting movement is activated at all times in the pallet truck so that the operator can overturn the pallet by forgetfulness. On the fixed part of the pallet truck there is a button which cancels the tilting movement at the operator's will.

### BRIEF DESCRIPTION OF THE DRAWINGS

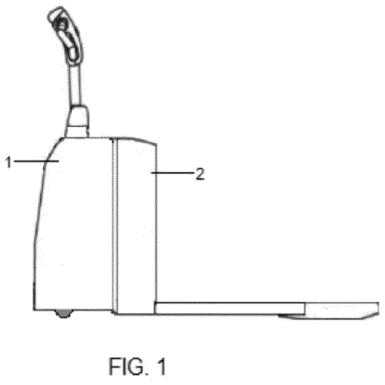

Figure 1.- Represents a view of the invention.

### DESCRIPTION OF A PREFERRED EMBODIMENT

With reference to the attached figures, according to the numbering shown therein, and in a preferred and non-limiting embodiment, the electric pallet truck with self-leveling forks is composed of a fixed part (1) common to all pallet trucks in which there is a drawbar with operating buttons for its movement or brake and lifting or lowering of the pallet, a driving wheel with its traction motor and brake and auxiliary wheels, a hydraulic lifting system, electrical and electronic components, and a battery, and a mobile part (2) in which the forks are arranged with their respective wheels for lifting and carrying the pallet.

The fixed part (1) has transversal and longitudinal inclination sensors associated with transversal and longitudinal tilting mechanisms present in the mobile part (2).

The fixed part (1) is equipped with a tilting override button.

## Claims

1. Electric pallet truck with self-leveling forks consisting of a fixed part (1) common to all pallet trucks in which are arranged a tiller with drive buttons for movement or brake and lifting or lowering of the pallet, a drive wheel with its traction motor and brake and auxiliary wheels, a hydraulic lifting system, electrical and electronic components, and a battery, and a mobile part (2) in which are arranged the forks with their respective wheels for lifting and carrying the pallet, electrical and electronic components, and a battery, and a mobile part (2) in which the forks are arranged with their respective wheels for lifting and carrying the pallet, **characterized in that** the fixed part has transverse and longitudinal tilt sensors and the mobile part has transverse and longitudinal tilting mechanisms.

2. Electric pallet truck with self-leveling forks according to claim 15 above, **characterized in that** the inclination sensors present in the fixed part (1) are associated with the tilting mechanisms present in the mobile part (2).

3. Electric pallet truck with self-leveling forks according to the previous claims, **characterized in that** the fixed part (1) has an override button for tilting.
